Europäisches Patentamt

European Patent Office

Office européen des brevets

(19)

(11) Veröffentlichungsnummer: **0 1 1 3 889**
**B1**

# (12) EUROPÄISCHE PATENTSCHRIFT

(45) Veröffentlichungstag der Patentschrift:
30.03.88

(51) Int. Cl.⁴: **G 01 P 3/36**

(21) Anmeldenummer: **83112642.0**

(22) Anmeldetag: **15.12.83**

(54) **Einrichtung zur Messung der Rotationsgeschwindigkeit.**

(30) Priorität: **18.12.82 DE 3247014**

(43) Veröffentlichungstag der Anmeldung:
**25.07.84 Patentblatt 84/30**

(45) Bekanntmachung des Hinweises auf die Patenterteilung:
**30.03.88 Patentblatt 88/13**

(84) Benannte Vertragsstaaten:
**DE FR GB**

(56) Entgegenhaltungen:
**EP - A - 0 074 609**
**FR - A - 2 449 897**
**FR - A - 2 465 202**
**FR - A - 2 475 220**

**OPTICS LETTERS, Band 7, Nr. 6, Juni 1982, Seiten 282-284, Optical Society of America, New York, US; R.A. BERGH et al.: "Compensation of the optical Kerr effect in fiber-optic gyroscopes"**

(73) Patentinhaber: **Alcatel N.V., De Lairessestraat 153, NL-1075 HK Amsterdam (NL)**

(84) Benannte Vertragsstaaten: **FR GB**

(73) Patentinhaber: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Auch, Wilfried, Dr., Weimarstrasse 6, D-7144 Asperg (DE)**
Erfinder: **Schlemper, Eberhard, Parkweg 3, D-7143 Vaihingen 7 (DE)**

(74) Vertreter: **Schmidt, Werner, Dipl.-Phys. et al, Standard Elektrik Lorenz AG Patent- und Lizenzwesen Postfach 30 09 29, D-7000 Stuttgart 30 (DE)**

## Beschreibung

Die Erfindung geht aus von einer Einrichtung zur Messung der Rotationsgeschwindigkeit wie im Oberbegriff des Anspruchs 1 angegeben. Eine solche Einrichtung ist in der EP-A-0 074 609 (Prioritätstag: 16.09.1981, Veröffentlichungstag; 23.03.1983) beschrieben.

Bei einer solchen Einrichtung wird ein Lichtstrahl in zwei Teilstrahlen aufgeteilt, und es wird mindestens einer der beiden Teilstrahlen dem Lichtwellenleiter über einen Modulator, der ein Modulationssignal mit der Frequenz $f_s$ erhält, zugeführt. Die beiden Teilstrahlen werden in die Enden des Lichtwellenleiters eingekoppelt.

Messungen haben gezeigt, dass diese Messeinrichtung einen systematischen Messfehler aufweist. Als Ursache wurde erkannt, dass sich die beiden Teilstrahlen, die den Lichtwellenleiter gegensinnig durchlaufen, beeinflussen und zwar bedingt durch nichtlineare Effekte.

Aus der FR-A-2 449 897, der FR-A-2 465 202 und der FR-A-2 475 220 ist jeweils ebenfalls eine Einrichtung zur Messung der Rotationsgeschwindigkeit bekannt, bei der ein Lichtstrahl durch einen Strahlleiter in zwei Teilstrahlen, die einen Lichtwellenleiter in entgegengesetzten Richtungen durchlaufen, aufgeteilt wird, bei der jeweils Teile dieser Teilstrahlen nach dem Durchlaufen des Lichtwellenleiters einander überlagert werden, bei der der durch die Überlagerung erzeugte Lichtstrahl einem optisch/elektrischen Wandler zugeführt wird und bei der aus dem Ausgangssignal des Wandlers die Rotationsgeschwindigkeit ermittelt wird, bekannt.

Bei der FR-A-2 449 897 wird zwischen den Enden des Lichtwellenleiters und dem Strahlteiler jeweils ein Teil des betroffenen Teilstrahls ausgekoppelt und einem optisch/elektrischen Wandler zugeführt. Die Ausgangssignale dieser Wandler werden zur Regelung von Polarisations-Stellgliedern, welche die Intensität der Teilstrahlen regeln, verwendet. Dadurch wird erreicht, dass jeder der beiden Teilstrahlen auf seinen Maximalwert geregelt wird. Die Regelung erfolgt für beide Teilstrahlen unabhängig.

Bei der FR-A 2 465 202 wird ausgenutzt, dass der Strahlteiler zwei durch Überlagerung erzeugte Lichtstrahlen erzeugt. Der eine Lichtstrahl wird – wie erwähnt – dem optisch/elektrischen Wandler zugeführt. Der andere Lichtstrahl wird einem weiteren optisch/elektrischen Wandler zugeführt. Aus dem Quotienten der Ausgangssignale dieser Wandler wird die Rotationsgeschwindigkeit ermittelt.

Bei der in der FR-A 2 475 220 beschriebenen Lösung werden die beiden Teilstrahlen oder Teile davon hinsichtlich ihrer Energie einander angeglichen, in mehreren Strahlteilern einander mehrmals überlagert und schliesslich vier optisch/ elektrischen Wandlern zugeführt. Deren Ausgangssignale werden Differenzverstärkern zugeführt. Mit einer solchen Einrichtung werden die durch Rauschen verursachten Störungen reduziert.

Aufgabe der Erfindung ist es, den oben erwähnten systematischen Messfehler zu beseitigen.

Die Lösung dieser Aufgabe erfolgt mit den im Anspruch 1, 6 oder 8 angegebenen Mitteln.

Vorteilhafte Weiterbildungen sind den jeweiligen abhängigen Ansprüchen zu entnehmen.

Bei der neuen Einrichtung ist gewährleistet, dass die Teilstrahlen nach Durchlaufen des Lichtwellenleiters entweder gleiche Intensitäten haben oder dass die Differenz zwischen ihren Intensitäten konstant ist. Es ist weiterhin gewährleistet, dass die Teilstrahlen nach dem Durchlaufen des Lichtwellenleiters keine spektrale Komponente bei der Frequenz $f_s$ des Modulationssignals aufweisen. Eine solche Komponente würde die Messung verfälschen.

Dadurch, dass zur Regelung die Teilstrahlen nach dem Durchlaufen des Lichtwellenleiters verwendet werden, wird sichergestellt, dass Schwankungen bei der Einkopplung in den Lichtwellenleiter ebenfalls ausgeregelt werden.

Werden als Phasenmodulatoren Bragg-Zellen verwendet, die zur Phasenmodulation mit unterschiedlichen Frequenzen angesteuert werden, dann ergibt sich folgendes Problem:

die Ablenkeffizienz und der Ablenkwinkel hängen von der Ansteuerfrequenz ab. Dies hat zur Folge, dass bei einer Änderung der Ansteuerfrequenz, die ja zur Modulation notwendig ist, die in den Lichtwellenleiter eingekoppelte Intensität verändert wird.

Dies ist neben der Auswirkung des nichtlinearen Effekts eine weitere Ursache dafür, dass die Teilstrahlen nach dem Durchlaufen des Lichtwellenleiters schwankende Intensitäten aufweisen.

Bei der in der EP-A-0 074 609 beschriebenen Lösung wird zur Ansteuerung der Bragg-Zelle zwischen zwei Ansteuersignalen, die in unterschiedlichen Oszillatoren erzeugt werden, umgeschaltet.

Es kann vorkommen, dass die beiden Ansteuersignale nicht stets dieselbe Intensität aufweisen. Dies wiederum hat zur Folge, dass auch die Intensität des von der Bragg-Zelle phasenmodulierten Teilstrahls schwankt.

Bei der neuen Einrichtung zur Messung der Rotationsgeschwindigkeit werden auch die Fehler, die durch die oben beschriebenen Effekte verursacht werden, beseitigt.

Bei der Regelung wird die Intensität des Ansteuersignals für den Modulator geregelt. Dies lässt sich auf einfache Weise realisieren.

Die Erfindung wird anhand der Zeichnungen beispielsweise näher erläutert. Es zeigt:

Fig. 1 ein Blockschaltbild einer Einrichtung zur Messung der Rotationsgeschwindigkeit ohne eine Regeleinrichtung für die Intensität der Teilstrahlen

Fig. 2 und 3 Ausführungsbeispiele, bei denen die Einrichtung nach Fig. 1 jeweils um eine Regeleinrichtung ergänzt ist.

Fig. 3a Impulsdiagramme zur Erläuterung der Funktionsweise der Einrichtung nach Fig. 3, und

Figuren 4 bis 6 weitere Ausführungsbeispiele.

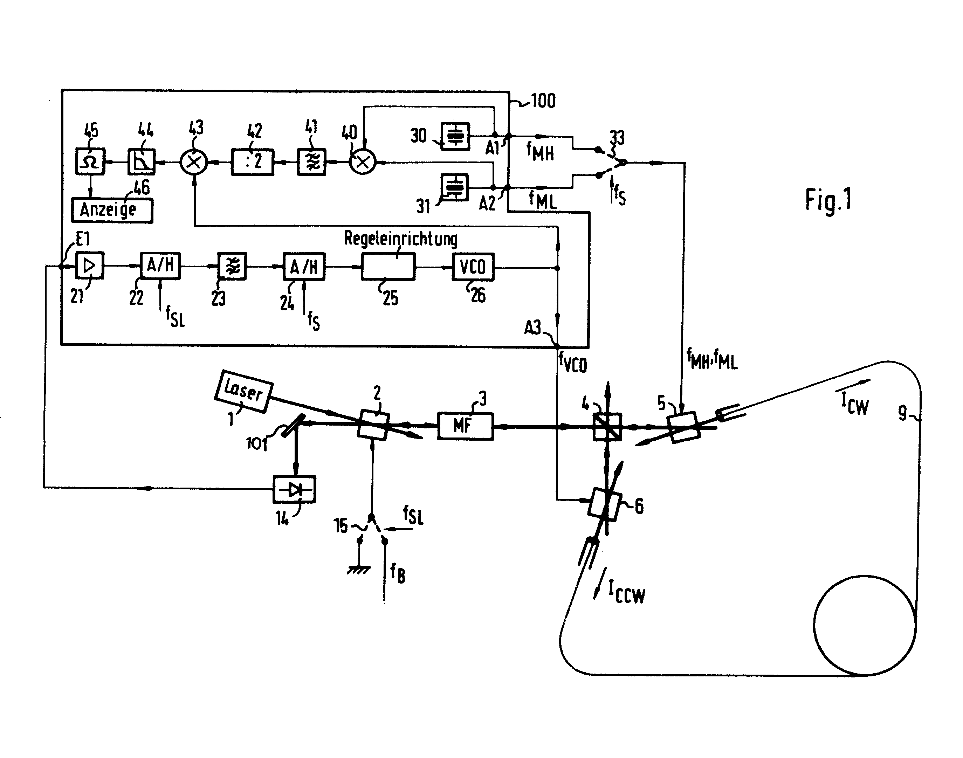

Anhand der Fig. 1 wird zunächst eine Einrichtung zur Messung der Rotationsgeschwindigkeit beschrieben, bei der noch keine Einrichtung zur Beseitigung des systematischen Messfehlers vorgesehen ist. Diese Einrichtung ist ähnlich der, die in der EP-A-0 074 609 beschrieben ist. Bei der hier beschriebenen Einrichtung wird jedoch eine der Lichtquelle nachgeschaltete Bragg-Zelle in vorteilhafter Weise so eingesetzt, dass sie gleichzeitig zur Isolation der Lichtquelle vom Licht, das zu ihr zurückreflektiert wird, zur Erzeugung eines gepulsten Lichtstrahls und als Strahlungsteiler dient. Für die Beschreibung der Ausführungsbeispiele werden zur Vereinfachung der Darstellung einige der Schaltungen zur Erzeugung der Modulationssignale und zur Auswertung zu einer Signalverarbeitungsschaltung 100 zusammengefasst.

Ein in einem Laser 1 erzeugter Lichtstrahl wird einer Bragg-Zelle 2 zugeführt. Die Bragg-Zelle 2 wird als aktiver Strahlteiler verwendet. Hierzu wird ihr periodisch ein Ansteuersignal mit der Frequenz $f_B$ zugeführt, und zwar über einen Schalter 15, der mit der Frequenz $f_{SL}$ gesteuert wird. Die Frequenz $f_{SL}$ ist gleich $1/2\tau$, wobei $\tau$ die Laufzeit durch den nachfolgend noch erwähnten Lichtwellenleiter ist. Während der Zeit, während der die Bragg-Zelle mit der Frequenz $f_B$ angesteuert wird, wird der Lichtstrahl, der von dem Laser 1 zur Bragg-Zelle 2 gelangt, um einen bestimmten Winkel abgelenkt und gelangt zu einem Monomode-Filter 3. Das Ausgangssignal des Monomode-Filters 3 gelangt zu einem passiven Strahlteiler 4, der den Lichtstrahl in zwei Lichtstrahlen $I_{CW}$ und $I_{CCW}$ aufteilt. Diese beiden Teilstrahlen gelangen zu zwei weiteren Bragg-Zellen 5 und 6. Die Bragg-Zellen 5, der der Teilstrahl $I_{CW}$ zugeführt wird, wird abwechselnd mit den Frequenzen $f_{MH}$ bzw. $f_{ML}$ angesteuert. Zwischen diesen beiden Frequenzen schaltet ein Schalter 33 mit der Frequenz $f_S$ um. Die Bragg-Zelle 6, der der Teilstrahl $I_{CCW}$ zugeführt wird, wird vom Ausgangssignal eines spannungsgesteuerten Oszillators VCO 26 angesteuert. Die von den Bragg-Zellen 5 und 6 ausgehenden Teilstrahlen werden in einen spulenförmig angeordneten Lichtwellenleiter 9 eingekoppelt. Nach dem Durchlaufen des Lichtwellenleiters gelangen die Teilstrahlen jeweils wieder zu den Bragg-Zellen 5 und 6, wobei jetzt der Teilstrahl $I_{CCW}$ zur Bragg-Zelle 5 und der Teilstrahl $I_{CW}$ zur Bragg-Zelle 6 gelangt. Der passive Strahlteiler 4 vereinigt die beiden Teilstrahlen wieder und der durch die Überlagerung erzeugte Lichtstrahl gelangt über das Monomode-Filter 3 zu dem aktiven Strahlteiler 2, der durch die Bragg-Zelle realisiert wird. Wie bereits erwähnt, wird mittels des Schalters 15 die Ansteuerfrequenz $f_B$ mit der Periode $2\tau$ wirksam geschaltet bzw. nicht wirksam geschaltet. Zum Zeitpunkt, zu dem der Strahl, der durch Überlagerung der beiden Teilstrahlen erzeugt wurde, zum aktiven Strahlungsteiler 2 gelangt, liegt am Strahlteiler 2 kein Ansteuersignal an, d.h. der Strahl passiert den Strahlteiler 2 ohne Ablenkung und gelangt somit nicht zum Laser 1 sondern zu einem Umlenkspiegel 101, der den Strahl auf einen optisch/elektrischen Wandler 14 richtet. Das Ausgangssignal des optisch/elektrischen Wandlers wird zu einem Eingang E1 der Signalverarbeitungsschaltung 100 geleitet. Dort wird dieses Signal nacheinander einem Verstärker 21, einer ersten Abtast-Halteschaltung 22, die mit der Frequenz $f_{SL}$ gesteuert wird, einem Bandfilter 23, dessen Mittenfrequenz gleich $f_S$ ist, einer zweiten Abtast-Halteschaltung 24, die mit der Frequenz $f_S$ gesteuert wird, einer Regeleinrichtung 25 und dem spannungsgesteuerten Oszillator VCO 26 zugeführt. Das Ausgangssignal des spannungsgesteuerten Oszillators 26 wird einerseits einem Ausgang A3 der Signalverarbeitungsschaltung 100 und andererseits einem Mischer 43 in dieser Signalverarbeitungsschaltung 100 zugeführt. Die Signalverarbeitungsschaltung enthält weiterhin zwei Oszillatoren 30 und 31, in denen Signale mit den Frequenzen $f_{MH}$ und $f_{ML}$ erzeugt werden. Diese Signale werden Ausgängen A1 bzw. A2 der Signalverarbeitungsschaltung zugeführt. Die von den Oszillatoren erzeugten Signale werden ausserdem einem Mischer 40 zugeführt, dessen Ausgangssignal einem Bandpass 41, dem eine Teilerstufe 42 nachgeschaltet ist, zugeführt. Das Ausgangssignal des Teilers 42 ist das zweite Eingangssignal des Mischers 43, dem, wie bereits erwähnt, das Ausgangssignal des VCO 26 zugeführt wird. Das Ausgangssignal des Mischers 43 wird einem Integrator 44 zugeführt und aus dessen Ausgangssignal wird in einer Einrichtung 45 in an sich bekannter Weise die Rotationsgeschwindigkeit ermittelt. Die Anzeige der Rotationsgeschwindigkeit erfolgt in einer Anzeigeeinrichtung 46. Die Ausgangssignale der Oszillatoren 30 und 31 werden weiterhin dem bereits erwähnten Schalter 33 zugeführt. Es ist zu bemerken, dass die Ansteuersignale für die einzelnen Einrichtungen, sofern sie dieselbe Frequenz aufweisen, jeweils von einem einzigen Generator abgeleitet werden und somit alle miteinander synchron sind.

Erfolgen bei dieser Einrichtung keine weiteren Massnahmen, dann entstehen die bereits erwähnten Schwankungen (beispielsweise weisen die Ausgangssignale der Oszillatoren 30, 31 unterschiedliche Intensitäten auf; das Ausgangssignal der Bragg-Zelle 5 trifft abhängig von der jeweiligen Ansteuerfrequenz an geringfügig unterschiedlichen Stellen auf den Lichtwellenleiter 9). Bei dieser beschriebenen Anordnung wird der Bragg-Zelle 2 abwechselnd ein Ansteuersignal mit der Frequenz $f_B$ und kein Ansteuersignal zugeführt. Dadurch wird, wie bereits erwähnt, der vom Laser ausgehende Lichtstrahl dem Monomode-Filter zugeführt oder zu einem (nicht dargestellten) Absorber geleitet. Dies hat zur Folge, dass der Lichtstrahl, aus dem die beiden Teilstrahlen abgeleitet werden, gepulst ist. Um für die Auswertung wieder ein kontinuierliches Signal zu erhalten, wird deshalb die Abtast-Halteschaltung 22 ebenfalls mit der Frequenz $f_{SL}$, mit der auch der Schalter 15 gesteuert wird, gesteuert. Zur Bestimmung der Rotationsgeschwindigkeit steuert die Regeleinrichtung den VCO 26 so, dass das Signal

mit der Frequenz $f_S$, mit der der Schalter 33 angesteuert wird, verschwindet. Das eine Signal, das dem Mischer 43 zugeführt wird, ist gleich der Mittenfrequenz der beiden Frequenzen, die in 30 und 31 erzeugt werden; also $f_M = (f_{MH} + f_{ML})/2$. Das andere Eingangssignal dieses Mischers 43 ist das Ausgangssignal des VCO 26. Durch Mischen von dem Signal mit der Frequenz $f_M$ und dem Signal mit der Frequenz $f_{VCO}$ erhält man eine Differenzfrequenz, die direkt proportional zur Rotationsgeschwindigkeit ist. Bei einer spulenförmigen Anordnung (Radius R) des Lichtwellenleiters wird die Rotationsgeschwindigkeit $\Omega$ ermittelt aus

$$f_M - f_{VCO} = \frac{2_R}{n \cdot \lambda_0}\, \Omega$$

mit $\lambda_0$ = Vakuumwellenlänge des Lichts und n = Brechungsindex des Lichtwellenleiters.

Nachfolgend wird anhand der weiteren Ausführungsbeispiele erläutert, welche Massnahmen zu treffen sind, damit die in der Beschreibungseinleitung erwähnten Störungen nicht mehr auftreten. Bei allen Ausführungsbeispielen wird von der in Fig. 1 dargestellten Einrichtung ausgegangen. Gleiche Baugruppen sind jeweils mit den gleichen Bezugszeichen versehen.

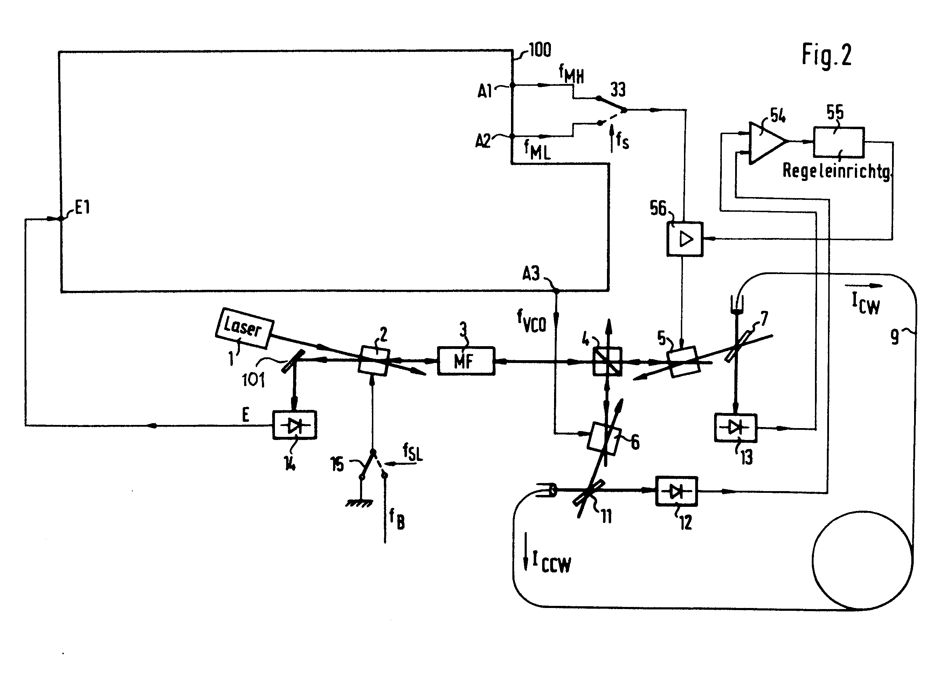

Bei dem Ausführungsbeispiel nach Fig. 2 sind zwischen den Bragg-Zellen 5 und 6 und den Enden des Lichtwellenleiters jeweils teildurchlässige Spiegel 7 und 11 vorgesehen. Diese teildurchlässigen Spiegel sind im Strahlengang so angeordnet, dass ein Teil der Teilstrahlen nach Durchlaufen der Lichtwellenleiter auf weitere optisch/elektrische Wandler 12 und 13 trifft. Die Ausgangssignale dieser optisch/elektrischen Wandler werden zu einem Differenzverstärker 54 geleitet, dem eine Regeleinrichtung 55 nachgeschaltet ist. Die Regeleinrichtung 55 steuert einen steuerbaren Verstärker 56, der in die Leitung zwischen dem Schalter 33 und der Bragg-Zelle 5 eingefügt ist, so, dass die Ansteuersignale für die Bragg-Zelle 5 mit der Frequenz $f_{MH}$ bzw. der Frequenz $f_{ML}$ gleiche Intensitäten haben. Die teildurchlässigen Spiegel sind so bemessen, dass jeweils ungefähr 10% des auf sie auftreffenden Teilstrahls zu dem dazugehörigen optisch/elektrischen Wandler gelangen.

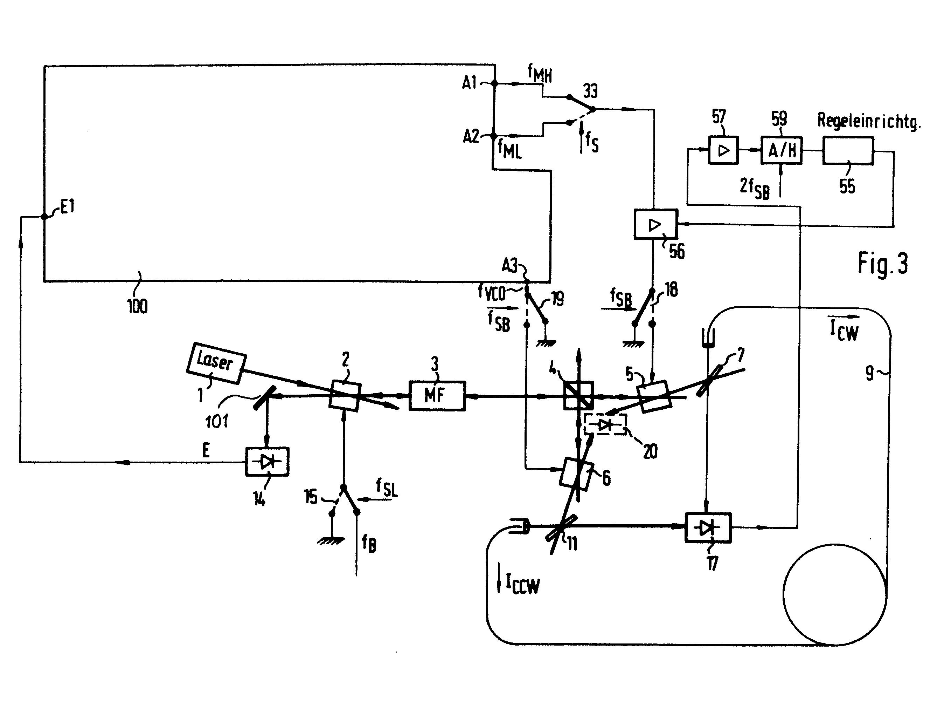

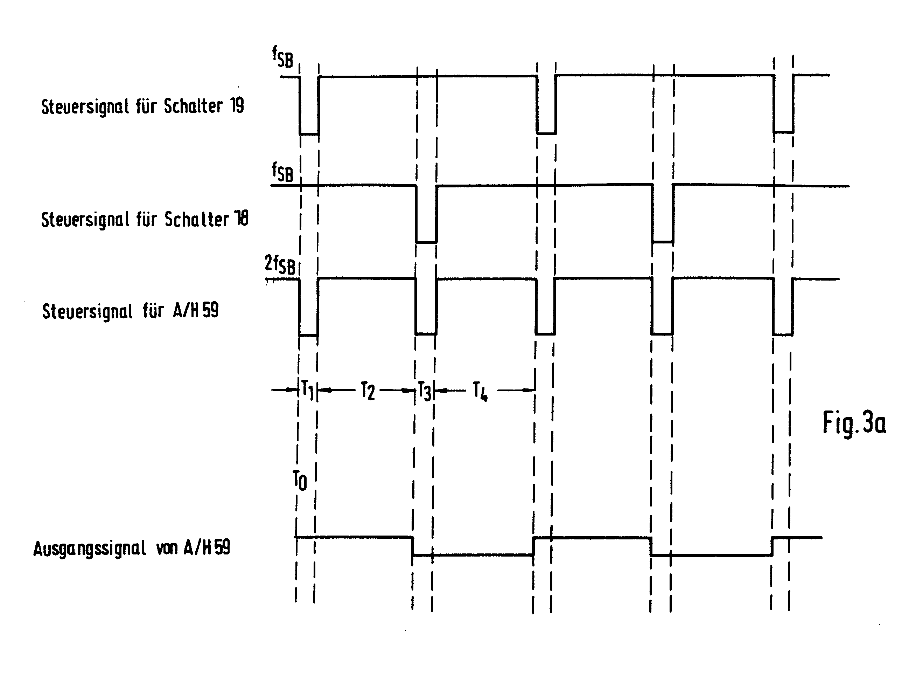

Anhand der Fig. 3 wird das nächste Ausführungsbeispiel erläutert.

Die Signale mit den Frequenzen $f_{MH}$ bzw. $f_{ML}$ und das Signal mit der Frequenz $f_{VCO}$ werden den Bragg-Zellen 5 und 6 über Schalter 18 bzw. 19 zugeführt. Diese werden jeweils mit einem Signal, das die Frequenz $f_{SB}$ hat, angesteuert. Zwischen den Enden des Lichtwellenleiters 9 und den Bragg-Zellen 5 bzw. 6 sind, wie beim Ausführungsbeispiel der Fig. 2, wieder teildurchlässige Spiegel 7 und 11 vorgesehen. Die von den Spiegeln durchgelassenen Teilstrahlen gelangen jedoch hier nicht zu jeweils einem optisch/elektrischen Wandler (wie bei Fig. 2), sondern auf einen einzigen optisch/elektrischen Wandler 17. Daher ist es hier notwendig, die Teilstrahlen $I_{CW}$ und $I_{CCW}$ zeitlich zu trennen. Hierzu schaltet man die Schalter 18 und 19 so, dass zu bestimmten Zeiten

– nur die Bragg-Zelle 5 wirksam ist (Zeit $T_1$),
– nur die Bragg-Zelle 6 wirksam ist (Zeit $T_2$) und
– beide Braggzellen 5 und 6 wirksam sind.

Hierbei wird eine Bragg-Zelle als wirksam bezeichnet, wenn sie mit einem solchen Signal angesteuert wird, dass der Teilstrahl in das ihr zugeordnete Ende des Lichtwellenleiters eingekoppelt wird.

Die Schalter werden mit Signalen, die die Frequenz $f_{SB}$ haben, angesteuert, wobei zu beachten ist, dass die Steuersignale für die beiden Schalter 18, 19 zueinander phasenverschoben sind.

Weiterhin muss der Verlauf dieser Signale so gewählt sein, dass die obigen Bedingungen erfüllt werden können. Ein Beispiel für die Ansteuersignale ist in der Fig. 3a dargestellt. Hierbei gilt:

$T_1$: Bragg-Zelle 6 ist nicht wirksam. Nach der Zeit $T_0 + \tau$ ($\tau$ ist Laufzeit des Teilstrahls im Lichtwellenleiter 9) ist am optisch/elektrischen Wandler 17 $I_{CW}$ vorhanden.

$T_2$: Es sind beide Bragg-Zellen wirksam. Beide Teilstrahlen durchlaufen den Lichtwellenleiter und werden nach ihrem Durchlaufen zur Auswertung einander überlagert.

$T_3$: Bragg-Zelle 5 ist nicht wirksam. Nach der Zeit $T_0 + T_1 + T_2 + \tau$ ist am optisch/elektrischen Wandler 17 $I_{CCW}$ vorhanden.

$T_4$: Wie bei $T_2$.

Das Ausgangssignal des optisch/elektrischen Wandlers 17 wird einem Verstärker 57, dem eine Abtast/Halteschaltung 59 nachgeschaltet ist, zugeführt.

Das Ausgangssignal der Abtast/Halteschaltung 59 weist einen konstanten Wert auf, wenn die beiden Teilstrahlen im Lichtwellenleiter die gleiche Intensität haben. Ist dies nicht der Fall (wie in Fig. 3a dargestellt), dann weist sein Ausgangssignal einen Wechselspannungsteil auf, aus dem in einer Regeleinrichtung 55 ein Regelsignal für einen steuerbaren Verstärker 56, der zwischen den Schalter 33 und die Bragg-Zelle 5 eingefügt ist, erzeugt wird.

Werden die Bragg-Zellen 5, 6 so betrieben, dass nicht der gesamte Lichtstrahl abgelenkt wird, dann ist es möglich, den jeweils nicht abgelenkten Teil direkt auf einen optisch/elektrischen Wandler (in der Fig. 3 gestrichelt (20) dargestellt) zu lenken, in diesem Fall sind die beiden teildurchlässigen Spiegel 7, 11 nicht notwendig.

Bei den Ausführungsbeispielen gemäss den Figuren 2 und 3 wurde davon ausgegangen, dass die Signale, die von den Oszillatoren über die Ausgänge A1 und A2 abgegeben werden, gleiche Intensitäten aufweisen. Unter dieser Annahme wird durch die beschriebene Regelung gewährleistet, dass an beiden Enden des Lichtwellenleiters Teilstrahlen gleicher Intensität eingekoppelt werden, d.h. es tritt dann in dem Lichtwellenleiter keine Intensitätsdifferenz auf.

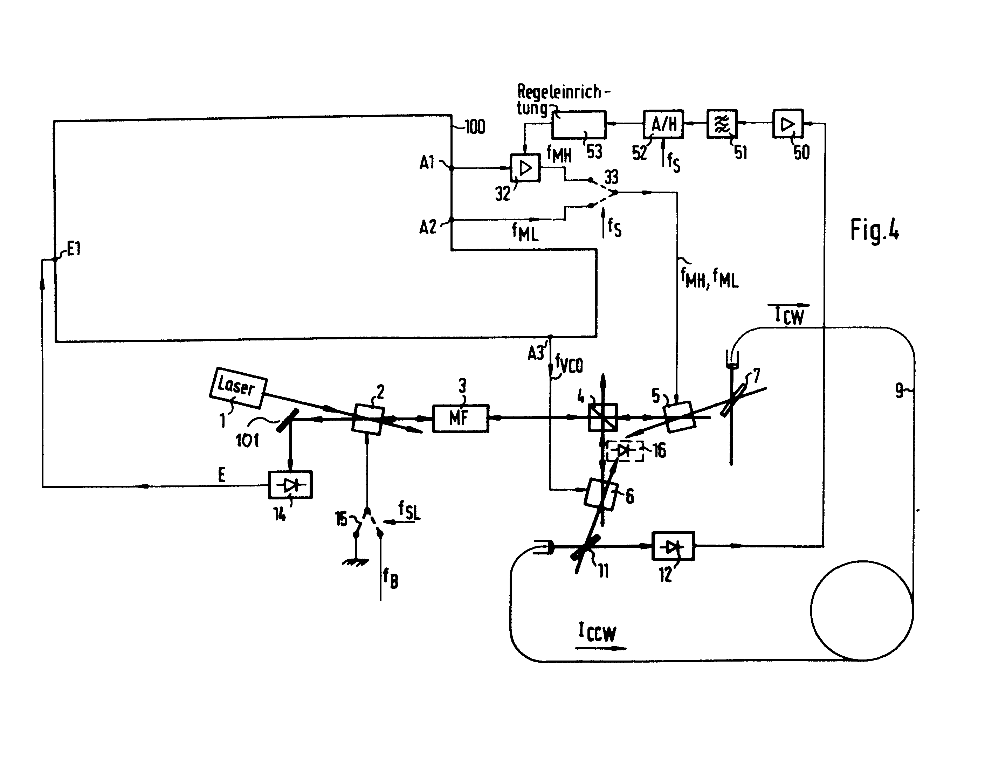

Nachfolgend wird anhand des Ausführungsbeispiels der Fig. 4 erläutert, wie die Regelung durchzuführen ist, wenn die Ausgangssignale der Oszillatoren 30 und 31, die die Frequenzen $f_{MH}$ bzw. $f_{ML}$ haben, unterschiedliche Intensitäten aufweisen. Nach dem Durchlaufen des Lichtwellen-

leiters 9 wird der Teilstrahl $I_{CW}$, der um die Frequenz $f_{MH}$ bzw. $f_{ML}$ frequenzverschoben ist, der Bragg-Zelle 6 über einen teildurchlässigen Spiegel 11 zugeführt. Der teildurchlässige Spiegel bewirkt, dass ein gewisser Anteil des Teilstrahls ausgekoppelt wird, und dieser ausgekoppelte Teil wird einem optisch/elektrischen Wandler 12 zugeführt. Aus Symmetriegründen ist auch zwischen die Bragg-Zelle 5 und das andere Ende des Lichtwellenleiters ein weiterer teildurchlässiger Spiegel 7 geschaltet. Alternativ hierzu ist es auch möglich, die Bragg-Zelle 6 so anzusteuern, dass nicht der gesamte Teilstrahl abgelenkt wird, sondern dass ein gewisser Anteil dieses Teilstrahls die Bragg-Zelle unabgelenkt passiert, und dieser nicht abgelenkte Teilstrahl wird einem optisch/elektrischen Wandler 16 zugeführt. Dies ist in der Fig. 4 gestrichelt dargestellt. In diesem Fall sind die beiden teildurchlässigen Spiegel 11 und 7 nicht notwendig. Unabhängig davon, wie ein Teil des Teilstrahls $I_{CW}$ ausgekoppelt wurde, wird dieser einem Verstärker 50, dem ein Bandfilter 51, dessen Mittenfrequenz gleich $f_S$ ist, zugeführt. Das Ausgangssignal dieses Bandfilters gelangt zu einer Abtast-Halteschaltung 52, die ein Steuersignal mit der Frequenz $f_S$ erhält. Aus dem Ausgangssignal dieser Abtast-Halteschaltung erzeugt eine Regeleinrichtung 53 ein Regelsignal. Dieses Regelsignal steuert einen steuerbaren Verstärker 32, der zwischen den Ausgang A1 und den Schalter 33 geschaltet ist, so, dass im Ausgangssignal des optisch/elektrischen Wandlers 12 keine spektrale Komponente bei der Frequenz $f_S$ vorhanden ist.

Jetzt macht es sich nicht mehr störend bemerkbar, dass die Signale mit den Frequenzen $f_{MH}$ und $f_{ML}$ am Ausgang der Oszillatoren eventuell unterschiedliche Amplituden aufweisen.

Bislang wurde davon ausgegangen, dass die Bragg-Zelle 2 mit unterschiedlichen Ansteuersignalen, wobei eines der Ansteuersignale die Frequenz $f_B$ und das andere die Frequenz null hat, angesteuert wird. Dadurch wird erreicht, dass das vom Laser abgegebene Signal einerseits vollkommen in Richtung des Monomodefilters abgelenkt wird und dass andererseits das vom Lichtwellenleiter zurückkommende Signal über einen Umlenkspiegel insgesamt dem optisch/elektrischen Wandler 14 zugeführt wird. Bei den Ausführungsbeispielen nach Fig. 2 und Fig. 4 ist es jedoch auch möglich, die Bragg-Zelle 2 kontinuierlich mit einem konstanten Signal anzusteuern, wobei jedoch darauf geachtet werden muss, dass die Intensität dieses Signals so gewählt ist, dass jeweils die eine Hälfte des vom Laser ausgehenden Strahls zu dem (nicht dargestellten Absorber) und die andere Hälfte des Signals zu dem Monomodefilter 3 geleitet wird. In umgekehrter Richtung gelangt wiederum eine Hälfte des von dem Lichtwellenleiter zurückkommenden Lichtstrahls ohne Ablenkung über den Umlenkspiegel zu dem optisch/elektrischen Wandler 14, während die andere Hälfte zum Laser 1 zurückfliesst. Wie die Ansteuerung der Bragg-Zelle 2 erfolgt, hat auf die beschriebenen Regeleinrichtungen keinen Einfluss. Bei dem Ausführungsbeispiel nach Fig. 3 hingegen ist nur während einer bestimmten Zeit eine Auswertung des durch die Überlagerung der beiden Teilstrahlen nach Durchlaufen des Lichtwellenleiters entstandenen Signals möglich. Während den übrigen Zeiten ist nur jeweils einer der beiden Teilstrahlen vorhanden. Die Bragg-Zelle 2 wird deshalb bei diesem Ausführungsbeispiel vorzugsweise so angesteuert, dass nur während den Zeiten, während denen der durch die Überlagerung der beiden Teilstrahlen vorhandene Lichtstrahl vorhanden ist, dieser Lichtstrahl zu der Signalverarbeitungschaltung 100 weitergeleitet wird.

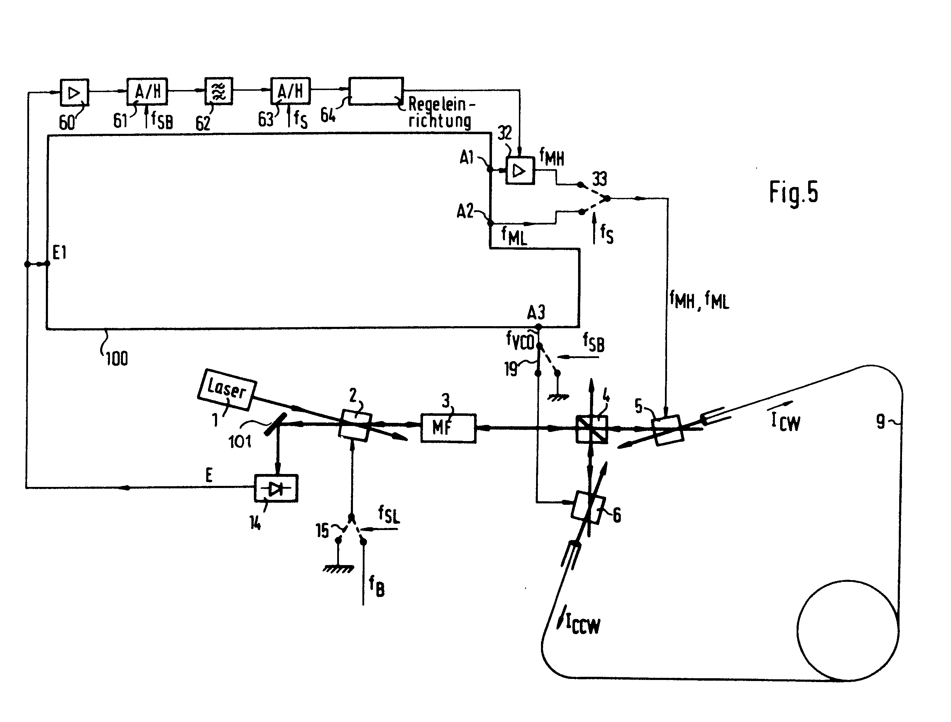

Bei dem nachfolgend anhand der Fig. 5 beschriebenen Ausführungsbeispiel wird davon ausgegangen, dass die Teilstrahlen, die den Lichtwellenleiter 9 durchlaufen, gepulste Teilstrahlen sind. Gepulste Teilstrahlen erhält man wiederum dadurch, dass die Bragg-Zelle 2 geeignet angesteuert wird. Wie bereits im Zusammenhang mit anderen Ausführungsbeispielen und der Fig. 1 beschrieben, wird mittels eines Schalters 15 mit der Frequenz $f_{SL}$ zwischen den beiden Ansteuersignalen, von denen eines die Frequenz $f_B$ hat, umgeschaltet. Die Frequenz $f_{SL}$ ist gleich $1\,(2\,\tau)$, wobei $\tau$ gleich der Laufzeit der Teilstrahlen durch den Lichtwellenleiter ist.

Bevor die Funktionsweise der Regelung näher erläutert wird, wird beschrieben, welche zusätzlichen Einrichtungen notwendig sind. Das Ausgangssignal des optisch/elektrischen Wandlers 14 wird nicht nur dem Eingang E1 der Signalverarbeitungsschaltung 100 zugeführt, sondern ausserdem einem Verstärker 60, dem eine Abtast-Halteschaltung 61, die mit der Frequenz $f_{SB}$ gesteuert wird, nachgeschaltet ist. Das Ausgangssignal der Abtast-Halteschaltung gelangt über ein Bandfilter 62 mit der Mittenfrequenz $f_S$ zu einer weiteren Abtast-Halteschaltung 63, die mit der Frequenz $f_S$ gesteuert wird. Aus deren Ausgangssignal wird in einer Regeleinrichtung 64 ein Regelsignal erzeugt, das einen steuerbaren Verstärker 32, der zwischen den Ausgang A1 und dem Schalter 33 geschaltet ist, steuert. Weiterhin ist zwischen den Ausgang A3 und die Bragg-Zelle 6 ein weiterer Schalter 19 eingefügt, der mit der Frequenz $f_{SB}$ gesteuert wird. Bei diesem Ausführungsbeispiel sind keine weiteren optisch/elektrischen Wandler notwendig.

Nachfolgend wird die Funktionsweise näher erläutert. Um Intensitätsunterschiede zwischen den Signalen mit den Frequenzen $f_{MH}$ und $f_{ML}$ messen zu können, muss es möglich sein, die Intensität von dem Signal $I_{CW}$, d. h. von dem nicht überlagerten Signal, messen zu können. Dies wird dadurch erzielt, dass der Bragg-Zelle 6 das Signal vom Ausgang A3 nicht kontinuierlich zugeführt wird, sondern dass zwischen diesem Signal und der Frequenz null umgeschaltet wird. Bei der Frequenz null koppelt die Bragg-Zelle 6 den ihr zugeführten Lichtstrahl nicht mehr in den Lichtwellenleiter ein. Somit ist während der Zeit, während der Schalter diese Stellung einnimmt, im Lichtwellenleiter nur der Teilstrahl $I_{CW}$ vorhanden. Nach der Zeit $\tau$ (Laufzeit im Lichtwellenleiter) muss der Schalter 19 wieder die Stellung einnehmen, in der der Bragg-Zelle 6 das Signal mit der Frequenz $f_{VCO}$ zugeführt wird, damit wieder ein «reziproker» Aufbau vorhanden ist und $I_{CW}$ zu dem optisch/elektrischen Wandler gelangen kann. Insgesamt erfolgt die Steuerung so, dass Lichtimpulse, die zum optisch/elektrischen Wandler gelangen, abwechselnd das überlagerte Signal ($I_{CW}$ plus $I_{CCW}$) und nur der Teilstrahl $I_{CW}$ sind.

Aus dem Signal $I_{CW}$ plus $I_{CCW}$ wird in der Signalverarbeitungsschaltung auf bekannte Weise die Rotationsgeschwindigkeit ermittelt, während in der Regeleinrichtung 64 das Regelsignal für den steuerbaren Verstärker erzeugt wird.

Mit den Ausführungsbeispielen gemäss den Figuren 4 und 5 ist es also möglich, Schwankungen zwischen den Intensitäten der von den Oszillatoren 30 und 31 abgegebenen Signalen auszuregeln.

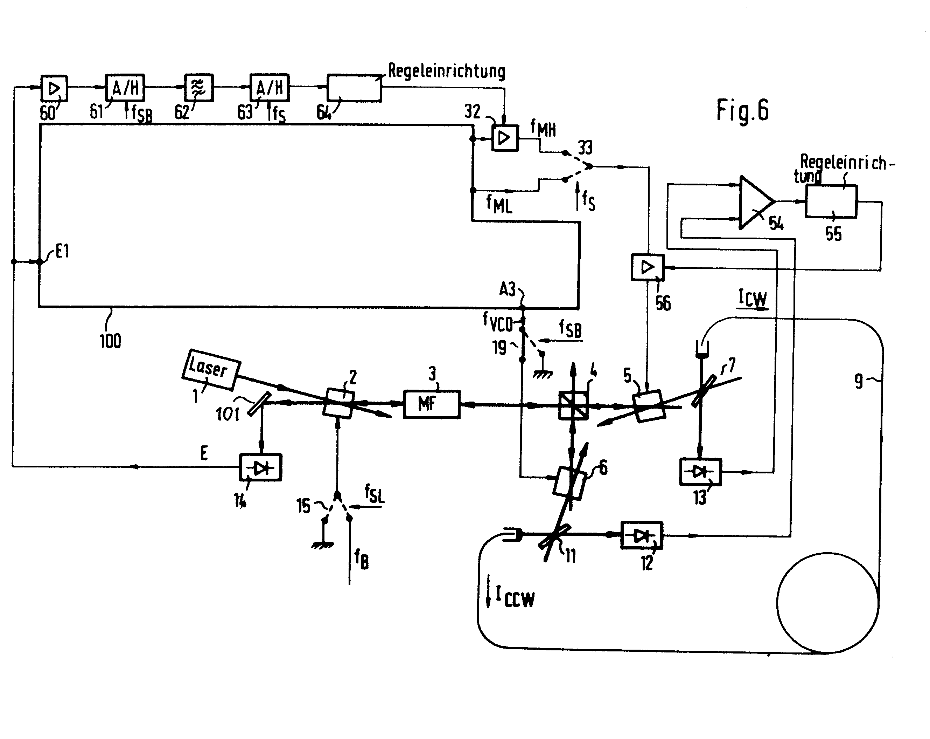

Es ist weiterhin möglich, eines der Ausführungssignale, bei denen die Intensitätsunterschiede zwischen den Oszillatorausgangssignalen ausgeregelt werden, mit einem der Ausführungsbeispiele, bei dem Intensitätsunterschiede zwischen den den Lichtwellenleiter gegensinnig durchlaufenden Teilstrahlen ausgeregelt werden, zu kombinieren. Eine durch eine solche Kombination (Ausführungsbeispiel gemäss Fig. 2 und Ausführungsbeispiel gemäss Fig. 5) entstandene Einrichtung ist in Fig. 6 dargestellt. Bei dieser Einrichtung ist es möglich, die beiden Arten der Intensitätsschwankungen auszuregeln.

Abschliessend ist zu bemerken, dass auf den Strahlengang im einzelnen nicht näher eingegangen wurde, denn es ist fachmännisches Wissen, diesen zu realisieren, wenn vorgegeben ist, wie ein Lichtstrahl abgegeben wird und auf welches Bauelement er auftreffen soll. So muss bei dem Ausführungsbeispiel gemäss Fig. 3 beispielsweise mittels einer geeigneten Abbildungsoptik gewährleistet werden, dass beide Teilstrahlen $I_{CW}$ und $I_{CCW}$ auf die optisch wirksame Fläche des optisch/elektrischen Wandlers auftreffen.

Bei der Beschreibung wird davon ausgegangen, dass Steuersignale, die dieselbe Frequenz aufweisen, zueinander synchron sind, es sei denn, es wird im Einzelnen etwas anderes hierzu gesagt.

Weiterhin wurde auf die Regeleinrichtungen an sich nicht näher eingegangen, da es auch hier fachmännisches Wissen ist, eine solche Einrichtung zu realisieren, wenn vorgegeben ist, welche Massnahmen zur Regelung vorgesehen sind und welches Signal welche zur Regelung zu verwendende Information enthält.

In der Beschreibung ist erwähnt, dass zwischen den Ausgangssignalen der Oszillatoren 30 und 31 mit der Frequenz $f_S$ umgeschaltet wird. Dem Modulator 5, der als Bragg-Zelle realisiert ist, werden diese beiden Signale periodisch nacheinander zugeführt. Dadurch wird der Teilstrahl $I_{CW}$ periodisch um Beträge in seiner Frequenz verschoben, wobei diese Beträge von der Grösse des Ansteuersignals abhängen. Dies wird, insbesondere im Zusammenhang mit den Patentansprüchen, als Modulation mit der Frequenz $f_S$ bezeichnet, da es bei der neuen Einrichtung für die Modulation nicht notwendig ist, dass zwischen zwei diskreten Frequenzen umgetastet wird.

## Patentansprüche

1. Einrichtung zur Messung der Rotationsgeschwindigkeit mit einer einen Lichtstrahl erzeugenden Lichtquelle (1), bei der Mittel (4) vorgesehen sind, die diesen Lichtstrahl in zwei Teilstrahlen ($I_{CW}$, $I_{CCW}$), die einen Lichtwellenleiter (9), der einen geschlossenen Lichtweg (9) bildet, in entgegengesetzten Richtungen durchlaufen, aufteilen, bei dem Mittel (4, 2, 101) vorgesehen sind, die die beiden Teilstrahlen nach Durchlaufen des Lichtwellenleiters (9) einander überlagern und den durch die Überlagerung erzeugten Lichtstrahl einem optisch/elektrischen Wandler (14) zuführen, bei der mindestens ein Modulator (5), der nicht in der Mitte des Lichtwellenleiters angeordnet ist und dem ein Modulationssignal mit der Frequenz $f_S$ zuführbar ist, zur Modulation von mindestens einem der Teilstrahlen vorhanden ist und bei der in einer Signalverarbeitungsschaltung (100) die Rotationsgeschwindigkeit aus der durch den Sagnac-Effekt bedingten Phasendifferenz zwischen den beiden Teilstrahlen ermittelbar ist, dadurch gekennzeichnet, dass mindestens ein weiterer optisch/elektrischer Wandler (17, 12, 13) vorgesehen ist, dem jeweils ein Anteil der Teilstrahlen zuführbar ist und zwar nachdem diesen den Lichtwellenleiter (9) durchlaufen haben, und dass aus dem Ausgangssignal des weiteren Wandlers in einer Regeleinrichtung (55) ein Regelsignal ableitbar ist, durch das die Amplitude des Ansteuersignals für den Modulator (5) so steuerbar ist, dass entweder beide Teilstrahlen nach Durchlaufen des Lichtwellenleiters dieselbe Intensität haben oder die Differenz zwischen den Intensitäten der beiden Teilstrahlen nach Durchlaufen des Lichtwellenleiters konstant bleibt.

2. Einrichtung nach Anspruch 1, dadurch gekennzeichnet, dass der Anteil eines jeden der beiden Teilstrahlen je einem optisch/elektrischen Wandler (12, 13) zuführbar ist, dass deren Ausgangssignale einem Differenzverstärker (54) zuführbar sind, dass dem Differenzverstärker die Regeleinrichtung (55) nachgeschaltet ist und dass das Regelsignal dieser Regeleinrichtung einen steuerbaren Verstärker (56), über den das Modulationssignal dem Modulator zuführbar ist, so steuert, dass die beiden Teilstrahlen nach dem Durchlaufen des Lichtwellenleiters gleiche Intensitäten aufweisen.

3. Einrichtung nach Anspruch 1, dadurch gekennzeichnet, dass eine Steuereinrichtung (18, 19) vorgesehen ist, die periodisch mit einer Frequenz $f_{SB}$ eine solche Steuerung durchführt, dass während unterschiedlicher Zeitabschnitte innerhalb einer Periode des Steuersignals nur der eine ($I_{CW}$), der andere ($I_{CCW}$) oder beide Teilstrahlen gleichzeitig ($I_{CW}$, $I_{CCW}$) den Lichtwellenleiter (9) durchlaufen kann/können, und dass das Ausgangssignal des weiteren optisch/elektrischen Wandlers (17) einer Abtast/Halteschaltung (59) zuführbar ist, die von einem zu dem Steuersignal $f_{SB}$ synchronen Signal steuerbar ist.

4. Einrichtung nach Anspruch 3, dadurch gekennzeichnet, dass die Frequenz des Steuersignals für die Abtast/Halteschaltung gleich dem doppelten Wert der Frequenz des Steuersignals für die Steuereinrichtung (18, 19) ist.

5. Einrichtung nach Anspruch 3 oder 4, dadurch gekennzeichnet, dass jedem Ende des Lichtwellenleiters (9) eine Bragg-Zelle (5, 6) vorgeschaltet ist, die von den Signalen der Steuereinrichtung (18, 19) so angesteuert ist, dass der jeweils betroffene Teilstrahl in den Lichtwellenleiter einkoppelbar oder nicht einkoppelbar ist.

6. Einrichtung zur Messung der Rotationsgeschwindigkeit mit einer einen Lichtstrahl erzeugenden Lichtquelle (1), bei der Mittel (4) vorgesehen sind, die diesen Lichtstrahl in zwei Teilstrahlen ($I_{CW}$, $I_{CCW}$), die einen Lichtwellenleiter (9), der einen geschlossenen Lichtweg (9) bildet, in entgegengesetzten Richtungen durchlaufen, aufteilen, bei dem Mittel (4, 2, 101) vorgesehen sind, die die beiden Teilstrahlen nach Durchlaufen des Lichtwellenleiters (9) einander überlagern und den durch die Überlagerung erzeugten Lichtstrahl einem optisch/elektrischen Wandler (14) zuführen, bei der mindestens ein Modulator (5), der nicht in der Mitte des Lichtwellenleiters angeordnet ist und dem ein Modulationssignal mit der Frequenz $f_S$ zuführbar ist, zur Modulation von mindestens einem der Teilstrahlen vorhanden ist und bei der in einer Signalverarbeitungsschaltung (100) die Rotationsgeschwindigkeit aus der durch den Sagnac-Effekt bedingten Phasendifferenz zwischen den beiden Teilstrahlen ermittelbar ist, dadurch gekennzeichnet, dass ein weiterer optisch/elektrischer Wandler (12) vorgesehen ist, dem ein Anteil des modulierten Teilstrahls ($I_{CW}$) nach Durchlaufen des Lichtwellenleiters (9) zuführbar ist, dass das Ausgangssignal dieses Wandlers über ein Bandfilter (51), dessen Mittenfrequenz gleich der Modulationsfrequenz $f_S$ ist, und eine zu dem Bandfilter (51) in Serie geschaltete Abtast/Halteschaltung (52), die mit der Modulationsfrequenz $f_S$ gesteuert ist, einer Regeleinrichtung (53) zuführbar ist, und dass durch die Regeleinrichtung ein vor den Modulator (5) geschalteter steuerbarer Verstärker (32) so steuerbar ist, dass die Intensität des modulierten Teilstrahls ($I_{CW}$) konstant bleibt.

7. Einrichtung nach Anspruch 6, dadurch gekennzeichnet, dass zur Erzeugung des Modulationssignals zwischen Signalen mit zwei unterschiedlichen Frequenzen $f_{MH}$, $f_{ML}$ umgeschaltet wird und dass der steuerbare Verstärker (32) im Signalweg eines dieser beiden Signale angeordnet ist.

8. Einrichtung zur Messung der Rotationsgeschwindigkeit mit einer einen Lichtstrahl erzeugenden Lichtquelle (1), bei der Mittel (4) vorgesehen sind, die diesen Lichtstrahl in zwei Teilstrahlen ($I_{CW}$, $I_{CCW}$), die einen Lichtwellenleiter (9), der einen geschlossenen Lichtweg (9) bildet, in entgegengesetzten Richtungen durchlaufen, aufteilen, bei dem Mittel (4, 2, 101) vorgesehen sind, die die beiden Teilstrahlen nach Durchlaufen des Lichtwellenleiters (9) einander überlagern und den durch die Überlagerung erzeugten Lichtstrahl einem optisch/elektrischen Wandler (14) zuführen, bei der mindestens ein Modulator (5), der nicht in der Mitte des Lichtwellenleiters angeordnet ist und dem ein Modulationssignal mit der Frequenz $f_S$ zuführbar ist, zur Modulation von mindestens einem der Teilstrahlen vorhanden ist und bei der in einer Signalverarbeitungsschaltung (100) die Rotationsgeschwindigkeit aus der durch den Sagnac-Effekt bedingten Phasendifferenz zwischen den beiden Teilstrahlen ermittelbar ist, dadurch gekennzeichnet, dass zur Erzeugung eines impulsförmigen Lichtstrahls die Lichtquelle (1) mit einer Impulsfolgefrequenz $f_{SL}$ wirksam oder nicht wirksam steuerbar (2, 15) ist, dass ein Teil des Ausgangssignals des optisch/elektrischen Wandlers (14) sowohl der Signalverarbeitungsschaltung (100) als auch über die Serienschaltung aus einer Abtast/Halteschaltung (61), die mit einer Frequenz $f_{SB}$ steuerbar ist, einem Bandfilter (62), dessen Mittenfrequenz $f_S$ gleich der Modulationsfrequenz ist, und einer weiteren Abtast/Halteschaltung (63), die mit der Modulationsfrequenz $f_S$ steuerbar ist, einer Regeleinrichtung (64) zuführbar ist und dass durch die Regeleinrichtung ein vor den Modulator (5) geschalteter steuerbarer Verstärker (32) so steuerbar ist, dass die Intensität des modulierten Teilstrahls ($I_{CW}$) konstant bleibt.

9. Einrichtung nach Anspruch 8, dadurch gekennzeichnet, dass ein Schaltelement (33) zur Erzeugung des Modulationssignals zwischen Signalen mit zwei unterschiedlichen, dem Modulator (5) zuzuführenden Frequenzen $f_{MH}$, $f_{ML}$ umschaltet und dass der steuerbare Verstärker (32) im Signalweg eines dieser beiden Signale angeordnet ist.

**Claims**

1. Rotation rate measuring instrument comprising a light source (1) producing a light beam, wherein means (4) are provided which split this light beam into two component beams ($I_{CW}$, $I_{CCW}$) which travel through an optical waveguide (9) in opposite directions, wherein means (4, 2, 101) are provided which combine the two component beams which have travelled through the optical waveguide (9) and direct the light beam produced by the combining to an optical-to-electrical transducer (14), wherein at least one modulator (5) which is not located in the middle of the optical waveguide and can be fed with a modulating signal of frequency $f_S$ is provided for modulating at least one of the component beams and wherein the rotation rate can be determined in a signal-processing circuit (100) from the phase difference between the two component beams due to the Sagnac effect, characterized in that at least one additional optical-to-electrical transducer (17, 12, 13) is provided to which a portion of each of the component beams can be directed after the beams have traversed the optical waveguide (9), and that from the output signal of said additional optical-to-electrical transducer a control signal can be derived which can vary the amplitude of the drive signal for the modulator (5) in such a way either that both component beams emerging from the optical waveguide have the same intensity or that the difference between the intensities of the two component beams emerging from the optical waveguide remains constant.

2. An instrument as claimed in Claim 1, characterized in that a portion of each of the two component beams can be fed into an optical-to-electrical transducer (12, 13), that the outputs of said optical-to-electrical transducers (12, 13) can be fed to a differential amplifier (54), that the differential amplifier is followed by a controller (55) and that said controller produces the control signal by which a variable-gain amplifier (56) through which the modulating signal can be fed to the modulator is controlled in such a way that the two component beams emerging from the optical waveguide have the same intensity.

3. An instrument as claimed in Claim 1, characterized in that a control facility (18, 19) is provided which performs such a periodic control at the frequency $f_{SB}$ that during different time intervals within a period of the control signal only one component beam ($I_{CW}$) or the other ($I_{CCW}$) or both component beams together ($I_{CW}$, $I_{CCW}$) can travel around the optical waveguide (9), and that the output signal of the additional optical-to-electrical transducer (17) can be fed to a sample-and-hold circuit (59) controlled by a signal locked to the control signal $f_{SB}$.

4. An instrument as claimed in Claim 3, characterized in that the frequency of the control signal for the sample-and-hold circuit is equal to twice the value of the frequency of the control signal for the control facility.

5. An instrument as claimed in Claim 3 or 4, characterized in that each end of the optical waveguide (9) is preceded by a Bragg cell (5, 6) which is controlled by the signals from the control facility (18, 19) in such a way that the respective component beam either can be coupled or cannot be coupled into the optical waveguide.

6. Rotation rate measuring instrument comprising a light source (1) producing a light beam, wherein means (4) are provided which split this light beam into two component beams ($I_{CW}$, $I_{CCW}$) which pass in opposite directions through an optical waveguide (9) which forms a closed light path (9), wherein means (4, 2, 101) are provided whereby the two component beams having travelled through the waveguide (9) are combined and the lightbeam generated by the combining is directed to an optical-to-electrical transducer (14), wherein there is at least one modulator (5) which is not located in the middle of the optical waveguide and which can be fed with a modulating signal of frequency $f_S$, for modulating at least one of the component beams, and wherein the rotation rate is determined in a signal-processing circuit (100) from the phase difference between the two component beams due to the Sagnac effect, characterized in that an additional optical-to-electrical transducer (4, 12) is provided to which a portion of the modulated component beam ($I_{CW}$) emerging from the optical waveguide (9) is directed, that the output of said transducer can be fed to a controller (53) through a band-pass filter (51) having a mid-frequency equal to the modulating frequency ($f_S$) and a sample-and-hold circuit (52) connected in series with the band-pass filter (51) and controlled at the modulating frequency ($f_S$), and that the controller controls a variable-gain amplifier (32) ahead of the modulator (5) in such a way that the intensity of the modulated component beam ($I_{CW}$) remains constant.

7. An instrument as claimed in Claim 6, characterized in that, to generate the modulating signal, switching takes place between signals having different frequencies ($f_{MH}$, $f_{ML}$), and that the variable-gain amplifier (32) is located in the path of one of these two signals.

8. Rotation rate measuring instrument comprising a light source (1) producing a light beam, wherein means (4) are provided which split this light beam into two component beams ($I_{CW}$, $I_{CCW}$) which pass in opposite directions through an optical waveguide (9) which forms a closed light path (9), wherein means (4, 2, 101) are provided whereby the two component beams which have travelled through the waveguide (9) are combined and the light beam generated by combining them is directed to an optical-to-electrical transducer (14), wherein there is at least one modulator (5) which is not located in the middle of the optical waveguide and which can be fed with a modulating frequency of frequency $f_S$, for modulating at least one of the component beams, and wherein the rotation rate is determined in a signal-processing circuit (100) from the phase difference between the two component beams due to the Sagnac effect, characterized in that, to produce a pulsed light beam, the light source (1) is activated and deactivated (2, 15) at a given pulse repetition rate ($f_{SL}$), that part of the output signal of the optical-to-electrical transducer (14) can be fed both to the signal-processing circuit (100) and, through the series circuit consisting of a sample-and-hold circuit (61) controllable at a frequency $f_{SB}$, a band-pass filter (62) whose mid-frequency ($f_S$) is equal to the modulating frequency and an additional sample-and-hold circuit (63) controllable at the modulating frequency ($f_S$), to a controller (64), and that the controller can control a variable-gain amplifier (32) ahead of the modulator (5) in such a way that the intensitiy of the modulated component beam ($I_{CW}$) remains constant.

9. An instrument as claimed in Claim 8, characterized in that, to generate the modulating signal, switching takes place between signals having two different frequencies ($f_{MH}$, $f_{ML}$) to be fed to the modulator (5) and that the variable-gain amplifier (32) is located in the path of one of these two signals.

**Revendications**

1. Appareil de mesure de vitesse de rotation comprenant une source de lumière (1) produisant un faisceau lumineux, dans lequel des moyens sont prévus pour diviser ce faisceau limineux en deux faisceaux partiels ($I_{CW}$, $I_{CCW}$) parcourant, dans des directions opposées, un guide d'onde optique (9) constituant un trajet lumineux fermé (9), dans lequel des moyens (4, 2, 101) sont prévus pour combiner l'un l'autre, les deux faisceaux partiels ayant parcouru le guide d'onde optique (9), le faisceau résultant de la combinaison étant appliqué à un transducteur optique-électrique (14), dans lequel au moins un modulateur (5) est prévu, qui n'est pas situé au milieu du guide d'onde optique et qui reçoit un signal de modulation de fréquence ($f_S$), pour la modulation d'au moins un des faisceaux partiels, et dans lequel la vitesse de rotation est évaluée par un circuit de traitement de signal (100) à partir de la différence de phase entre faisceaux partiels causée par l'effet Sagnac, caractérisé en ce que, au moins un convertisseur optique-électrique additionnel (17, 12, 13) est prévu, auquel est appliquée une partie de chacun des faisceaux partiels, après que ceux-ci aient parcouru le guide d'onde optique (9), et en ce que, dans un dispositif de réglage (55), un signal de réglage est engendré, à partir du signal de sortie de ce convertisseur additionnel, par lequel l'amplitude du signal de commande du modulateur (5) est ajustée, de manière que soit maintenues constantes les intensités ou la différence entre les intensités des deux faisceaux partiels, après qu'ils aient parcouru le guide d'onde optique.

2. Appareil conforme à la revendication 1, caractérisé en ce que ladite partie de chacun des deux faisceaux partiels est couplée à l'un de deux transducteurs optique-électrique respectifs (12, 13), dont les signaux de sorties sont fournis à un amplificateur différentiel (54), en ce que l'amplificateur différentiel est suivi par un dispositif de réglage (55) et en ce que ce dispositif de réglage produit un signal de réglage qui commande un amplificateur à gain réglable (56) par lequel est transmis le signal de modulation du modulateur, de façon que les deux faisceux partiels, après qu'ils aient parcouru le guide d'onde optique, aient des intensités égales.

3. Appareil conforme à la revendication 1, caractérisé en ce qu'un dispositif de commande (18, 19) est prévu, lequel effectue une commande périodique à la fréquence $f_{SB}$, telle que durant des intervalles de temps différents à l'intérieur d'une période de signal de commande, seul l'un des faisceaux partiels ($I_{CW}$), ou l'autre ($I_{CCW}$), ou les deux faisceaux partiels ensemble ($I_{CW}$, $I_{CCW}$) parcoure ou parcourent le guide d'onde optique et en ce que le signal de sortie du convertisseur optique-électrique additionnel (17) est appliqué à un circuit d'échantillonnage-blocage (59) commandé par un signal synchronisé sur le signal de commande $f_{SB}$.

4. Appareil conforme à la revendication 3, caractérisé en ce que la fréquence du signal de commande du circuit d'échantillonnage-blocage est égale à deux fois celle du signal de commande du dispositif de commande (18, 19).

5. Appareil conforme à la revendication 3 ou 4, caractérisé en ce que chacune des extrémités du guide d'onde optique (9) est précédée d'une cellule de Bragg (5, 6) commandée par les signaux du dispositif de commande (18, 19) de façon que le faisceau partiel respectif est couplé ou non couplé au guide d'onde optique.

6. Appareil de mesure de vitesse de rotation comprenant une source de lumière (1) produisant un faisceau lumineux, dans lequel des moyens sont prévus pour diviser ce faisceau lumineux en deux faisceaux partiels ($I_{CW}$, $I_{CCW}$) parcourant, dans des directions opposées, un guide d'onde optique (9) constituant un trajet lumineux fermé (9), dans lequel des moyens (4, 2, 101) sont prévus pour combiner l'un l'autre, les deux faisceaux partiels ayant parcouru le guide d'onde optique (9), le faisceau résultant de la combinaison étant appliqué à un transducteur optique-électrique (14), dans lequel au moins un modulateur (5) est prévu, qui n'est pas situé au milieu du guide d'onde optique et qui reçoit un signal de modulation de fréquence $f_S$, pour la modulation d'au moins un des faisceaux partiels, et dans lequel la vitesse de rotation est évaluée par un circuit de traitement de signal (100) à partir de la différence de phase entre faisceaux partiels causée par l'effet Sagnac, caractérisé en ce que, au moins un convertisseur optique-électrique additionnel (12) est prévu, auquel est appliquée une partie du faisceau partiel modulé ($I_{CW}$) après que celui-ci ait parcouru le guide d'onde optique (9), en ce que le signal de sortie de ce transducteur est appliqué par un filtre passe-bande (51) dont la fréquence centrale est égale à la fréquence de modulation $f_S$ et par un circuit d'échantillonnage-blocage (52) connecté en série avec le filtre passe-bande (51) et commandé à la fréquence de modulation ($f_S$), à un dispositif de réglage (53), et en ce qu'un amplificateur à gain réglable (32) couplé au modulateur (5) est commandé par ce circuit de commande de façon telle que l'intensité du faisceau partiel modulé ($I_{CW}$) est maintenue constante.

7. Appareil conforme à la revendication 6, caractérisé en ce que le signal de modulation est engendré par commutation entre des signaux ayant des fréquences différentes ($f_{MH}$, $f_{ML}$) et en ce que l'amplificateur à gain réglable (32) est situé sur le trajet de l'un de ces deux signaux.

8. Appareil de mesure de vitesse de rotation comprenant une source de lumière (1) produisant un faisceau lumineux, dans lequel des moyens sont prévus pour diviser ce faisceau lumineux en deux faisceaux partiels ($I_{CW}$, $I_{CCW}$) parcourant, dans des directions opposées, un guide d'onde optique (9) constituant un trajet lumineux fermé (9), dans lequel des moyens (4, 2, 101) sont prévus pour combiner l'un l'autre, les deux faisceaux partiels ayant parcouru le guide d'onde optique (9), le faisceau résultant de la combinaison étant appliqué à un transducteur optique-électrique (14), dans lequel au moins un modulateur (5) est prévu, qui n'est pas situé au milieu du guide d'onde optique et qui reçoit un signal de modulation de fréquence $f_S$, pour la modulation d'au moins un des faisceaux partiels, et dans lequel la vitesse de rotation est évaluée par un circuit de traitement de signal (100) à partir de la différence de phase entre faisceaux partiels causée par l'effet Sagnac, caractérisé en ce que, pour produire un faisceau lumineux pulsé, la source de lumière (1) est activée ou désactivée (2, 15) à une fréquence de répétition d'impulsions $f_{SL}$ en ce qu'une partie du signal de sortie du transducteur optique-électrique (14) est appliquée au circuit de traitement de signal (100) et, par l'intermédiaire d'un agencement série d'un circuit d'échantillonnage-blocage (61) commandé une fréquence $f_{SB}$, d'un filtre passe-bande (62) dont la fréquence centrale $f_S$ est égale à la fréquence de modulation, et d'un circuit d'échantillonnage-blocage additionnel (63) commandé à la fréquence de modulation $f_S$), à un dispositif de réglage (64), et en ce qu'un amplificateur à gain réglable (32) couplé au modulateur (5) est commandé par ce circuit de commande de façon telle que l'intensité du faisceau partiel modulé ($I_{CW}$) est maintenue constante.

9. Appareil conforme à la revendication 8, caractérisé en ce qu'un élément de commutation est disposé pour engendrer le signal de modulation par commutation entre des signaux ayant des fréquences différentes ($f_{MH}$, $f_{ML}$) qui sont fournis au modulateur (5) et en ce que l'amplificateur à gain réglable (32) est situé sur le trajet de l'un de ces deux signaux.

Fig.1

Fig.2

Regeleinrichtg.

Laser

MF

$f_{MH}$ $f_S$ $f_{ML}$

$f_{VCO}$

$f_{SL}$ $f_B$

$I_{CW}$ $I_{CCW}$

A1 A2 A3 E E1

33 100 54 55 56 5 6 7 9 11 12 13 14 15 101 1 2 3 4

Fig. 3

Fig.3a

Steuersignal für Schalter 19 — $f_{SB}$

Steuersignal für Schalter 18 — $f_{SB}$

Steuersignal für A/H 59 — $2f_{SB}$

Ausgangssignal von A/H 59

$T_0$  $T_1$  $T_2$  $T_3$  $T_4$

0 113 889

Fig.4

Fig.5

Fig.6

0 113 889